# EUROPEAN PATENT APPLICATION

(11) **EP 3 804 893 A1**
(43) Date of publication of application: **14.04.2021**
(21) Application number: 19749464.4
(22) Date of filing: 06.06.2019
(51) Int. Cl.: B23D 57/00, B23D 59/00, B28D 1/08, B28D 7/00, G05B 15/02

(54) **SYSTEM AND METHOD FOR CONTROLLING THE TENSIONING AND SYNCHRONIZING THE MOVEMENTS OF A DIAMOND WIRE MACHINE**

(30) Priority: 06.06.2018 PT 2018110775
(71) Applicant: Fravizel - Equipamentos Metalomecânicos Lda., 2025-999 Alcanede (PT)
(72) Inventor: Frazão, Eliseu, 2025-999 Alcanede (PT)
(74) Representative: Pereira da Cruz, Joao
(86) International application number: PCT/PT2019/050015
(87) International publication number: WO 2019/235949

(57) **Abstract**

The present invention concerns a system and method for controlling the tensioning and synchronization of diamond wire machine movements that allows for the correct operation of the diamond wire machine.

## Description

### BRIEF INTRODUCTION TO THE INVENTION

The growing need for increased productivity in the exploration of ornamental rock quarries in recent years has created a need to develop new approaches to processing ever larger masses of rock.

The creation of new modes of control is essential to enabling these machines to be operationalized.

### STATE OF THE ART OF THE INVENTION

In the research of the state of the art of the invention, which was carried out with the aim of assessing whether the present invention hereby described and claimed would already have been thought of or executed by other inventors, the following patent documents were identified, and we duly highlight their differences from the present invention: Patent AT513118 Markus Hatzer describes a diamond wire cutting machine that is driven by a motor, as in the case of others with an electric motor, and which includes vertical and horizontal extendable arms to adapt to the shape of the rock mass.

The vertical and horizontal extendable arms serve to adapt the width and height of the cutting in accordance with the rock mass.

On these extendable arms there are wheels that guide the diamond wire which is set in movement by means of a traction wheel coupled to the electric motor thus cutting the rock mass. For the system to be effective it is necessary to synchronize the movements of the vertical and horizontal arms, and the traction motor, to keep the perimeter of the diamond wire and its tensioning constant.

The invention hereby described and claimed comprises a control system that allows for the correct operation of the diamond wire machine.

This system and method for controlling the tensioning and synchronization of diamond wire machine movements claimed in the present invention comprises a cutting controller that commands and controls all the components that constitute the diamond wire machine.

The aforementioned cutting controller is not known to the state of the art.

### INDUSTRIAL APPLICATION

The present invention will allow for the effective control of the diamond wire machine through the control of the tensioning of the diamond wire and the respective synchronization of the movements of the vertical, horizontal and central arms.

### BRIEF DESCRIPTION OF THE DRAWINGS

The following description is presented with reference to the attached drawings which are submitted for reference purposes only, without any limiting character:
Figure 1 - diamond wire machine (25);
Figure 2 - block diagram of the operation of the cutting controller (12);
Figure 3 - block diagram of the operating method of the cutting controller (12) (to be concluded); and
Figure 4 - stages of the operating method of the cutting controller (12).

### Legend of the reference numbers

- central tensioning column (1);
- central column support (2);
- 2 vertical movement arms (4);
- 2 horizontal movement arms (5);
- reference value of the consumption in Amperes of the traction motor (6);
- cutting controller (12);
- command signal of the descent speed of the arms (13);
- command signal of the hydraulic tensioning (14) of the diamond wire;
- reference value of the intended consumption of the electric motor (15);
- reference value of the consumption of the electric motor read (16);
- descent/ascent order (17) of the operator;
- automatic mode (18);
- final cutting mode (19);
- manual positioning mode (20);
- reference value of the tensioning (21);
- electric current sensor (22);
- operator (23);
- diamond wire (24); and
- diamond wire machine (25).

### SUMMARY OF THE INVENTION

The tensioning of the diamond wire (24) is maintained through a hydraulic system that moves a central tensioning column (1) and the respective central column support (2) of the diamond wire machine.

The tensioning of the diamond wire (24) is pre-defined (21) according to the hardness of the type of rocks to be sawed and also according to the position of the diamond wire (24) in relation to the height of the sawing block.

In accordance with the height of the sawing block, the diamond wire (24) will become less tense as the cutting of the block is concluded.

As such, the tension of the diamond wire (24) will display constant values from the top to the end of the block to be sawed.

With this pre-defined tensioning value of the diamond wire (24), the diamond wire machine can extend and contract the 2 vertical movements arms (4) and the 2 horizontal movement arms (5), thus ensuring that the dimension of the length of the total perimeter of the diamond wire (24) remains unaltered, which function only occurs due to the respective adjustment, in the central tensioning column (1) and consequently in the central column support (2) .

The control mode of the tensioning of the diamond wire (24) is realized through the central tensioning column (1) and the respective support of the central column (2) in accordance with the downward movement i.e. from the top of the block to be sawed to its base.

As the 2 vertical movement arms (4) continue to cut by means of the diamond wire (24) the downward-moving rock mass, the central tensioning column (1) and the respective of the central column support (2) compensate for the displacement of the 2 vertical movement arms (4) or the 2 horizontal movement arms (5) to keep the tensioning of the diamond wire (24) constant based on the consumption reference value in Amperes (16) of the traction motor (6) of the diamond wire (24) machine.

### DETAILED DESCRIPTION OF THE INVENTION

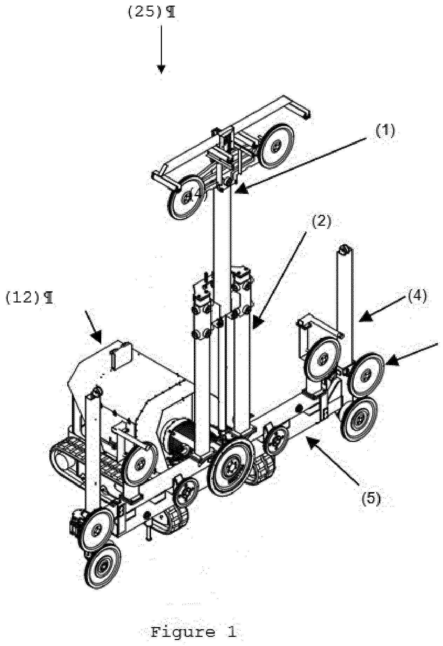

The system for controlling the tensioning and synchronization of a diamond wire machine for cutting ornamental stone blocks, as depicted in Figure 1, comprises a cutting controller (12) that controls all the components of the diamond wire machine (25), specifically:
- a central tensioning column (1);
- a central column support (2);
- 2 vertical movement arms (4);
- 2 horizontal movement arms (5); and
- a continuous diamond wire (24).

The surprising technical effect is the fact that, based on the cutting parameter (traction motor consumption (6)), a level of tensioning and linear speed of the diamond cable is achieved, while simultaneously controlling the vertical movement of the arms (3) by means of a reducer (4), the traction motor (6) and the tensioning system (1).

The cutting controller (12) described and claimed in the present invention presents, as one of its main functions, that of achieving, according to a certain parameter for cutting (consumption in amps (16) of the traction motor (6)) a block of stone, control of the tensioning level and linear speed of the diamond wire (24), by means of the simultaneous control and command of the following components:
- the 2 vertical movement arms (4);
- the drive reducer of the vertical arms (4);
- the traction motor (6); and
- the central tensioning column (1).

The continuous diamond wire (24) is guided and tensioned respectively by the central tensioning column (1) and by the respective central column support (2), by the 2 horizontal movement arms (4) and by the 2 [vertical] movement arms (5).

The cutting controller (12) commands and controls respectively:
- the 2 vertical movement arms (4), which guide the diamond wire (24);
- the central tensioning column (1) of the diamond wire and the respective central column support (2), which guides and tensions the diamond wire (24);
- the 2 horizontal movement arms (5), which guide the diamond wire (24); and
- an electrical current sensor (22);
- the consumption in amps (16) of the traction motor (6) of the diamond wire machine (25);
- the tensioning (21) of the diamond wire (24); and
- the linear cutting speed of the diamond wire (24).

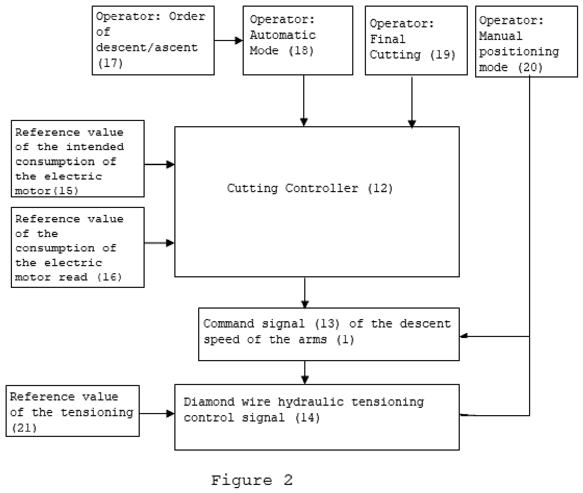

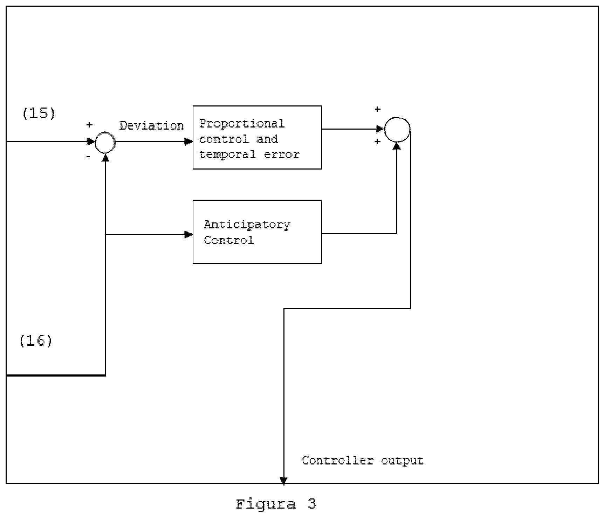

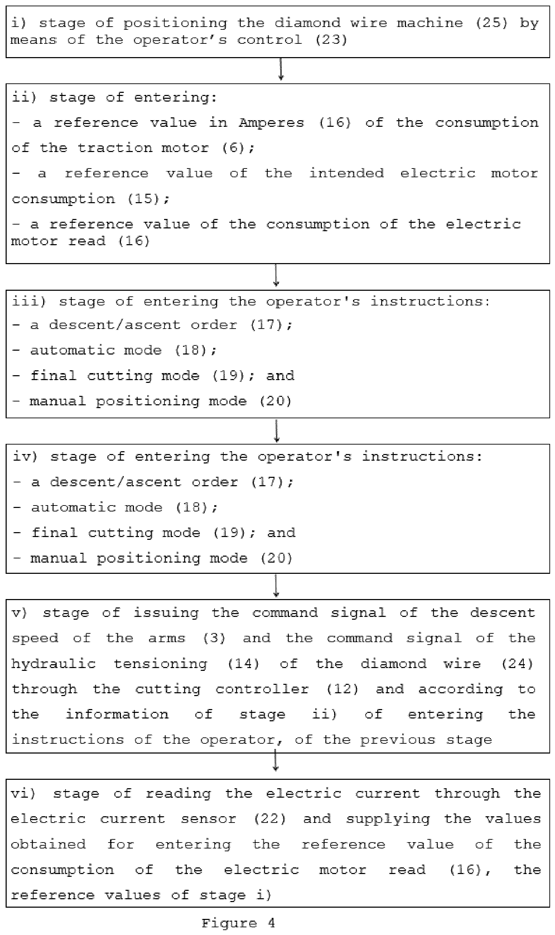

In the command and control of the diamond wire machine (25), as shown in Figures 2, 3 and 4, through the cutting controller (12) the following input data/inputs are entered:
- a reference value in Amperes (16) of the consumption of the traction motor (6);
- a reference value of the intended consumption of the traction motor (15);
- a reference value of the consumption of the traction motor read (16);
- a reference value of the tensioning (21);
- a descent/ascent order (17), commanded by the operator (23) ;
- an automatic mode (18), commanded by the operator (23), in which the respective cutting controller (12) automatically controls the parameters of the diamond wire machine (25) according to the reference values (15), (16) and (21);
- a final cutting mode (19), commanded by the operator (23), in which the cutting controller (12) automatically controls the feed speed of the 2 vertical movement arms (4) and the 2 horizontal movement arms (5), increasing the diamond wire tensioning (24) for this purpose; and
- a manual positioning mode (20) of the diamond wire machine (25) in the block of rock to be cut by the diamond wire machine (25), commanded by the operator (23) .

In the manual positioning mode (20) the operator (23) has control of the vertical (4) and horizontal (5) arms to position the diamond wire (24) at the start-off cutting point. The control compensates the tensioning arm (1) to maintain the perimeter of the diamond wire (24).

In automatic mode (18), the operator (23), when inserting the operating parameters (15), (16) and (21), the machine (25) will operate in automatic cutting mode.

In the final cutting mode (19), the machine (25) reduces the linear speed of the diamond wire (24) and the feed of the vertical arms (4) so that the cutting of the final part of the rock mass is of higher quality.

The 2 vertical movement arms (4) are commanded by a command signal of the descent and ascent speed (13) of the vertical arms (4) issued by the cutting controller (12).

The central tensioning column (1) and its central column support (2) are respectively commanded by:
- a command signal of the hydraulic tensioning (14) of the diamond wire (24); and
- a reference value of the tensioning (21);
issued by the cutting controller (12).

The control signal of the hydraulic tensioning of the diamond wire (14) is electronically controlled by the cutting controller (12).

The manufacturer of the diamond wire machine (25) previously defines a reference value of the tensioning (21).

The reference value of the intended electric motor consumption (15) is entered by the operator (23).

The reference value of the consumption of the electric motor read (16) is a value measured by an electric current sensor (22).

The commands or order signals:
- descent/ascent order (17) of the vertical arms (4);
- automatic mode (18);
- final cutting mode (19); and
- manual positioning mode (20)
are inserted by the operator (23).

The system for controlling the tensioning and synchronization (12) of the movements of the diamond wire machine (25):
- compares the reference value of the consumption of the electric motor read (16) with the intended reference value (15);
- does not signal (13) if the reference value of the consumption of the electric motor read (16) is different from the intended reference value (15);
- signals (13) if the reference value of consumption of the electric motor read (16) differs from the desired reference value (15);
- acts proportionally according to the difference between the reference value of the consumption of the electric motor read (16) and the desired reference value (15) ;
- acts taking into account the tendency of the difference in a given time space; and
- acts in accordance with the future prediction of the evolution of the signal from the anticipatory control to stabilize the output signal over time.

The method for controlling the tensioning and synchronization of diamond wire machine movements through the cutting controller (12), comprises the following steps:
i) stage of positioning the diamond wire machine (25) by means of the operator's control (23);
ii) stage of entry / inputs by the operator (23) of:
   - a reference value in Amperes of the consumption of the traction motor (6);
   - a reference value of the intended electric motor consumption (15); and
   - a reference value of the tensioning (21) iii) stage of entry / inputs of the operator's instructions (23):
   - order of descent/ascent (17) of the 2 vertical movement arms (3) and/or of the 2 horizontal movement arms (5);
   - automatic mode (18);
   - final cutting mode (19); and
   - manual positioning mode (20)
(iv) the stage of issuing the command signal of the descent speed of the 2 horizontal movement arms (5) and the control signal of the hydraulic tensioning (14) of the diamond wire (24) through the cutting controller (12) and in accordance with the information entered in stage iii) of introducing the operator's instructions, of the previous stage; and
vi) the stage of reading the electric current through the electric current sensor (22) and supplying the values obtained for the entering of the reference value of the consumption of the electric traction motor (6) read (16), the reference values of stage ii).

The present invention should only be limited by the spirit of the following claims.

## Claims

1. System for controlling the tensioning and synchronization of diamond wire machine (25) movements for cutting ornamental stone blocks, which includes a central tensioning column (1), a central column support (2), 2 vertical movement arms (4), 2 horizontal movement arms (5) and a continuous diamond wire (24) which is guided and tensioned respectively by the central tensioning column (1) and by its central column support (2), by the 2 vertical movement arms (4) and by the 2 horizontal movement arms (5), **wherein the system comprises** a cutting controller (12) that commands and controls a diamond wire machine (25) **and wherein** the cutting controller (12) commands and controls respectively:
- the 2 vertical movement arms (4), which guide the diamond wire (24) vertically;
- the central tensioning column (1) of the diamond wire (24) and its central column support (2), which guides and tensions the diamond wire (24);
- the 2 horizontal movement arms (5), which guide the diamond wire (24); and
- an electrical current sensor (22);
- the consumption in amps (16) of the traction motor (6) of the diamond wire machine (25);
- the hydraulic tensioning (14) of the diamond wire (24); and
- the linear velocity of the diamond wire (24).

2. System for controlling the tensioning and synchronization of diamond wire machine movements according to claim 1 **wherein** the command and control of the diamond wire machine (25) through the cutting controller (12), the following input data are entered:
- a reference value in Amperes of the consumption of the traction motor (6);
- a reference value of the intended electric motor consumption (15);
- a reference value of the consumption of the electric motor read (16);
- a reference value of the tensioning (21);
- a descent/ascent order (17), commanded by the operator (23) ;
- an automatic mode (18), commanded by the operator (23), in which the respective cutting controller (12) automatically controls the parameters of the diamond wire machine (25) according to the reference values (15), (16) and (21);
- a final cutting mode (19), commanded by the operator (23), in which the cutting controller (12) automatically, controls the feed speed of the 2 vertical movement arms (4) and the 2 horizontal movement arms (5), increasing/decreasing for this purpose the tensioning of the diamond wire (24); and
- a manual positioning mode (20) of the diamond wire machine (25) in the block of rock to be cut by the diamond wire machine (25), commanded by the operator (23) .

3. System for controlling the tensioning and synchronization of diamond wire machine movements according to claim 1 **wherein** the two vertical movement arms (4) are commanded by:
- a command signal of the speed of descent and ascent of the vertical arms (4)
issued by the cutting controller (12).

4. System for controlling the tensioning and synchronization of diamond wire machine movements according to claim 1 **wherein** the central tensioning column (1) and the respective central column support (2) are commanded by:
- a command signal of the hydraulic tensioning (14) of the diamond wire (24); and
- a reference value of the tensioning (21)
issued by the cutting controller (12).

5. System for controlling the tensioning and synchronization of diamond wire machine movements according to claim 1 **wherein** the command signal of the speed (13) of descent of the 2 horizontal movement arms (5) is commanded electronically by the cutting controller (12).

6. System for controlling the tensioning and synchronization of diamond wire machine movements according to claim 1 **wherein** the command signal of the hydraulic tensioning of the diamond wire (14) is commanded electronically by the cutting controller (12).

7. System for controlling the tensioning and synchronization of diamond wire machine movements according to claim 1 **wherein** a reference value for the tensioning (21) of the diamond wire (25) is previously defined.

8. System for controlling the tensioning and synchronization of diamond wire machine movements according to claim 1 **wherein** the reference value of the intended consumption of the electric motor (15) is entered by the operator (23).

9. System for controlling the tensioning and synchronization of diamond wire machine movements according to claim 1 **wherein** the reference value of the consumption of the electric motor read (16) is a value measured by an electric current sensor (22).

10. System for controlling the tensioning and synchronization of diamond wire machine movements according to claim 1 **wherein** the commands of:
- descent/ascent (17);
- automatic mode (18);
- final cutting mode (19); and
- manual positioning mode (20)
are entered by the operator (23).

11. System for controlling the tensioning and synchronization of diamond wire machine movements according to claim 1 **wherein** it
- compares the reference value of the consumption of the electric motor read (16) with the desired reference value (15) ;
- does not signal (13) if the reference value of the consumption of the electric motor read (16) is equal to the desired reference value (15);
- signals (13) if the reference value of the consumption of the electric motor read (16) is different from the desired reference value (15);
- acts proportionally according to the difference between the reference value of the consumption of the electric motor read (16) and the desired reference value (15) ;
- acts taking into account the tendency of the difference in a given time space; and
- acts in accordance with the future prediction of the evolution of the signal from the anticipatory control to stabilize the output signal over time.

12. Method for controlling the tensioning and synchronization of diamond wire machine movements, according to the previous claims **comprising** the following stages:
(i) the step of positioning the diamond wire machine (25) through the operator's (23) control;
(ii) the stage of entry by the operator (23) of:
- a reference value in Amperes of the consumption of the traction motor (6);
- a reference value of the intended consumption of the electric motor (15);
- a reference value of the tensioning (21);
(iii) a stage of entering the operator's instructions (23) :
- descent/ascent order (17) of the 2 vertical movement arms (3) and/or the 2 horizontal movement arms (5);
- automatic mode (18);
- final cutting mode (19); and
- manual positioning mode (20)
(iv) the stage of the issuance of the command signal of the descent speed of the 2 horizontal movement arms (5) and the command signal of the hydraulic tensioning (14) of the diamond wire (24) through the cutting controller (12) and in accordance with the information entered in stage iii) of entering the operator's instructions, of the previous stage; and
vi) the stage of reading the electric current through the electric current sensor (22) and supplying the values obtained for the entry of the reference value of the consumption of the electric motor read (16), the reference values of stage ii).
